# FASCICULE DE BREVET EUROPEEN

(11) **EP 2 689 971 B1**
(45) Date de publication et mention de la délivrance du brevet: **28.09.2016**
(21) Numéro de dépôt: 13178278.1
(22) Date de dépôt: 26.07.2013
(51) Int. Cl.: B60R 19/16, B65G 69/00

(54) **Dispositif butoir amortisseur pour véhicule, notamment pour un véhicule automobile**
Puffereinrichtung für ein Fahrzeug, insbesondere für ein Kraftfahrzeug
Buffer arrangement for vehicle, specially for a vehicle automobile

(30) Priorité: 27.07.2012 FR 1257330
(43) Date de publication de la demande: 29.01.2014
(73) Titulaire: Pommier, 95310 Saint Ouen l'Aumone (FR)
(72) Inventeur: Preud'homme, Thierry, 95450 COMMENY / FRANCE (FR); Aubignat, Frédéric, 60660 CIRES LES MELLO (FR)
(74) Mandataire: Berger, Helmut

(56) Documents cités:
- EP-A1- 1 864 865
- EP-A1- 1 977 934
- EP-A2- 1 369 307
- DE-U1-202011 050 555
- FR-A1- 2 812 254

## Description

L'invention concerne un dispositif butoir amortisseur destiné à être fixé sur un support notamment prévu sur un véhicule, selon le préambule de la revendication 1.

Un dispositif butoir amortisseur de ce type est déjà connu par le document DE 20 2011 050555. Dans ce dispositif le corps de logement du rouleau tampon cylindrique est réalisé sous forme d'un corps massif en un matériau élastiquement amortissant, qui comporte une cavité de réception du rouleau et des évidements de support des extrémités de l'axe du rouleau. L'effet d'amortissement et de rappel du rouleau est produit par le matériau élastiquement déformable du corps et par la plaque arrière de fixation sur la surface de support.

Ce dispositif connu est désavantageux en raison de son corps massif en un matériau élastiquement déformable, dans lequel doivent être pratiqués la cavité de logement du rouleau tampon et les évidements de réception et de support des extrémités de l'axe du rouleau.

Un autre dispositif butoir amortisseur est connu par le document EP 1 369 307, qui comprend un carter dont les parois latérales sont pourvues de découpes dans lesquelles sont disposés déplaçables, perpendiculairement à la paroi arrière du carter, des blocs inserts de support de l'axe du rouleau tampon. Les blocs insert sont déplaçables à l'encontre de ressorts de rappel interposés entre les inserts et le fond de la découpe de la paroi latérale correspondante.

Ce dispositif présente des inconvénients que sa structure est complexe et ne permet pas un préassemblage et un montage à l'état préassemblé sur la surface de support.

L'invention a pour but de pallier les inconvénients des dispositifs butoirs amortisseurs connus.

Pour atteindre ce but, le dispositif selon l'invention comporte les caractéristiques qui sont énoncées dans la partie caractérisante de la revendication 1.

D'autres caractéristiques de l'invention sont énoncées dans des revendications dépendantes.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels:
- la figure 1 est une vue en perspective, explosée d'un premier mode de réalisation d'un dispositif butoir amortisseur selon l'invention ;
- la figure 2 est une vue de dessus du dispositif butoir amortisseur de la figure 1, à l'état assemblé, la moitié droite étant une vue en coupe selon la ligne II-II de la figure 3 ;
- la figure 3 est une vue en coupe le long de la ligne III-III de la figure 2 ;
- la figure 4 est une vue en coupe le long de la ligne IV-IV de la figure 2 ;
- la figure 5 est une vue en perspective explosée d'un deuxième mode de réalisation du dispositif butoir amortisseur selon l'invention ;
- les figures 6 est une vue du mode de réalisation selon la figure 5, qui correspond à la vue 4 du premier mode de réalisation ;
- la figure 7 est une vue en perspective et explosée d'un troisième mode de réalisation d'un dispositif butoir amortisseur selon l'invention, qui ne fait pas partie de l'invention ;
- la figure 8 est une vue frontale du dispositif de figure 7, à l'état assemblé ;
- la figure 9 est une vue en coupe le long de la ligne IX-IX de la figure 8, et
- la figure 10 est une vue en coupe selon la ligne X-X de la figure 8.

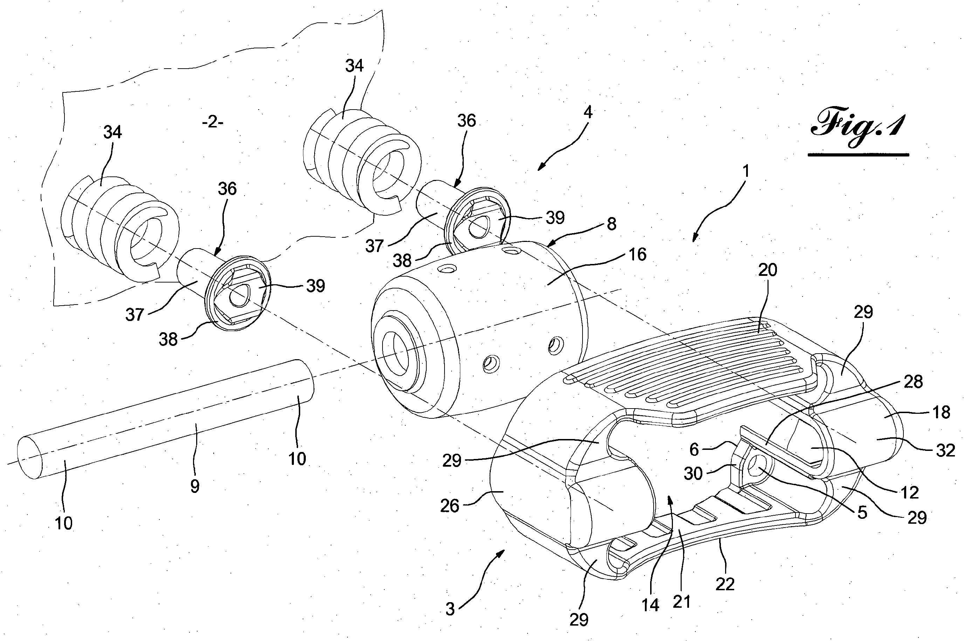

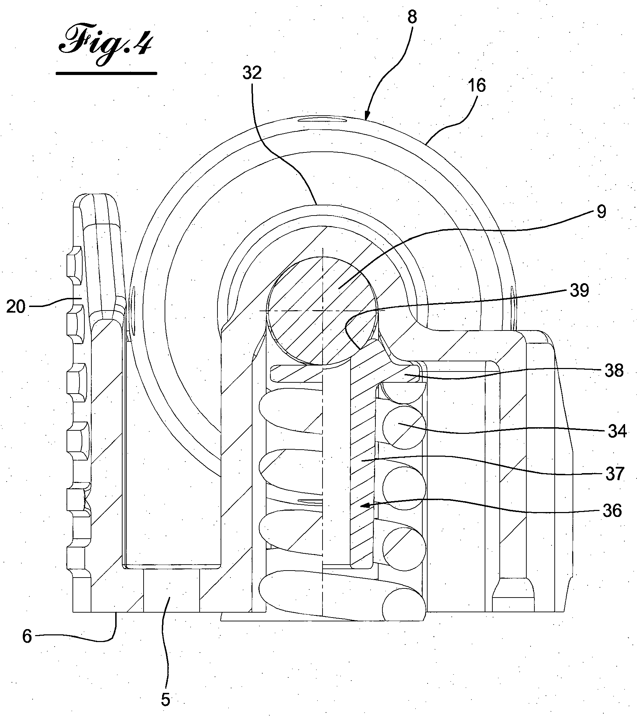

Les figures 1 à 4 illustrent un premier mode de réalisation d'un dispositif butoir amortisseur selon l'invention, désigné par la référence générale 1 et destiné à être fixé sur la surface 2 d'un support prévu par exemple sur un véhicule automobile. Le dispositif butoir comprend essentiellement un carter 3 avantageusement, en tout matériau approprié par exemple en matière plastique ou en acier, qui est configuré pour enfermer ou encapsuler un agencement butoir 4 et pour être fixé sur la surface de support 2 à l'aide de par exemple quatre organes de fixation tels que des vis, dont les trous de passage 5 sont prévus sur l'extrémité arrière 6 du carter. L'agencement butoir 4 comprend un rouleau tampon butoir 8 monté rotatif sur un axe 9 dont les extrémités 10 sont retenues dans des cavités de logement 12 prévues au niveau des extrémités dans la direction longitudinale du boîtier, parallèle à l'axe 9, de part et d'autre d'une ouverture centrale 14 dans l'extrémité avant du carter permettant le passage vers l'avant d'une partie périphérique 16 du rouleau 8.

Chaque cavité de logement 12 est ouverte vers l'arrière et fermée vers l'avant par une paroi semi-cylindrique convexe en forme d'un berceau 18. Ces berceaux 18 font saillie vers l'avant au-dessus des extrémités avant des parois latérales, à savoir de la paroi latérale supérieure 20 et de la paroi latérale inférieure 21 dont le bord avant 22 est courbe de façon à avoir une hauteur dans sa partie centrale, qui est inférieure à la hauteur de ses extrémités, alors que la paroi supérieure 20 présente une hauteur à ses extrémités qui est inférieure à celle de sa partie restante.

Les berceaux en saillie sont reliés aux parois latérales 20 et 21, au niveau de leur base par des portions de parois avant 29.

Chaque berceau 18 est fermé à son extrémité axiale extérieure par la paroi latérale d'extrémité 26 du boîtier. Du côté axialement intérieur, le berceau en forme d'un U est ouvert et porté par des éléments en forme de colonnes 28 qui s'étendent perpendiculairement à la face d'extrémité arrière et sont reliées au niveau de leur pied par des parties de paroi 30 aux parois de l'extrémité arrière du carter, qui comportent les passages 5 des vis de fixation.

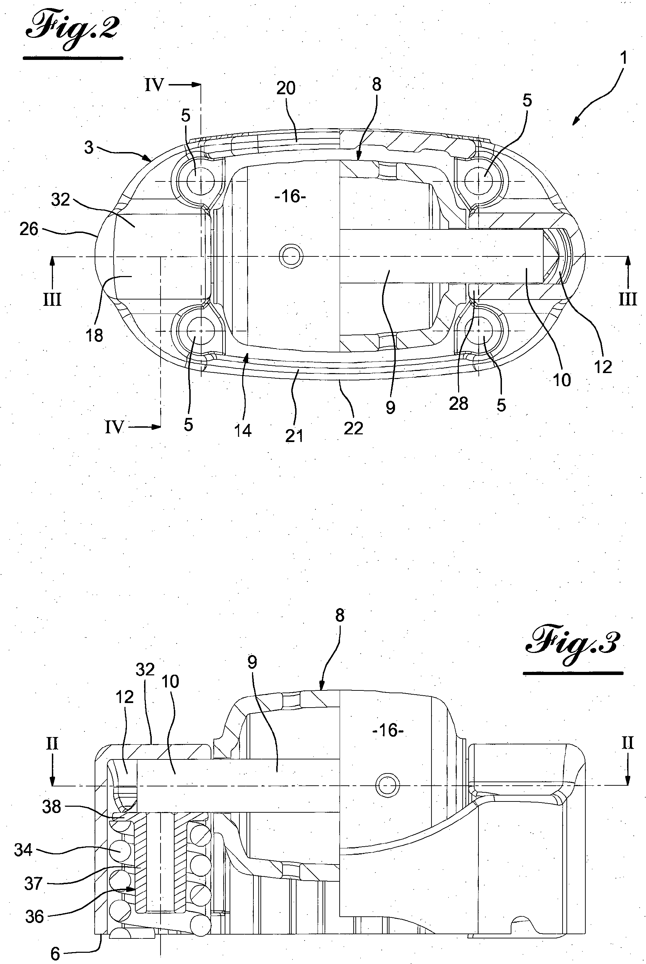

Comme on le voit clairement sur les figures 1 et 2, le carter présente aux deux côtés longitudinaux de chaque berceaux 18, entre les colonnes de celui-ci et les parois latérales 20 et 21 un espace libre au-dessus de chaque partie de paroi 30, à travers lequel les vis de fixation peuvent être introduites dans le support 2, à travers les trous 5, à partir de l'extrémité avant du carter. Plus précisément, cette zone d'accès libre au trou 5 est obtenue par des découpes dans les parois de liaison 29, au-dessus des zones de paroi arrière 30, donc au-dessus des trous 5, au niveau de l'ouverture centrale 14 de passage vers l'avant de la partie périphérique 16 du rouleau 8.

On constate ainsi que le carter présente une forme générale parallélépipédique, creuse, arrondie aux extrémités latérales et dont l'extrémité arrière est ouverte et dégagée, à l'exception des parois de liaison 30 alors que l'extrémité avant n'est fermée qu'au niveau de ses extrémités latérales par des parois bombées avant 32 des berceaux.

Les extrémités 10 de l'axe 9 sur lesquelles est monté rotatif le rouleau 8, à l'état assemblé du dispositif butoir, sont retenues dans les fonds des berceaux 18, chacune par un ressort hélicoïdal 34 qui s'étend perpendiculairement à partir du support 2, par l'intermédiaire d'un guide de butée 36 qui comporte une partie tubulaire cylindrique 37 destinée à s'engager axialement dans le ressort et dont l'extrémité extérieure libre est en forme d'un plateau 38 d'un diamètre supérieur au diamètre de la partie tubulaire 37 et qui présente une face avant en relief, configurée de façon à présenter un creux 39 de forme complémentaire à la forme de l'extrémité 10 correspondant de l'axe 9 pour soutenir cette extrémité.

C'est donc par l'intermédiaire de leur guide de butée 36 que les ressorts 34 poussent les extrémités 10 de l'axe 9 dans le fond des berceaux 18 lorsque le carter qui enferme le dispositif butoir 4 est fixé par des vis de fixation (non représentés) sur la surface de support 2, les ressorts étant comprimés lors de cette fixation. Dans ce premier mode de réalisation, les extrémités arrière des ressorts sont en appui directe contre la surface 2.

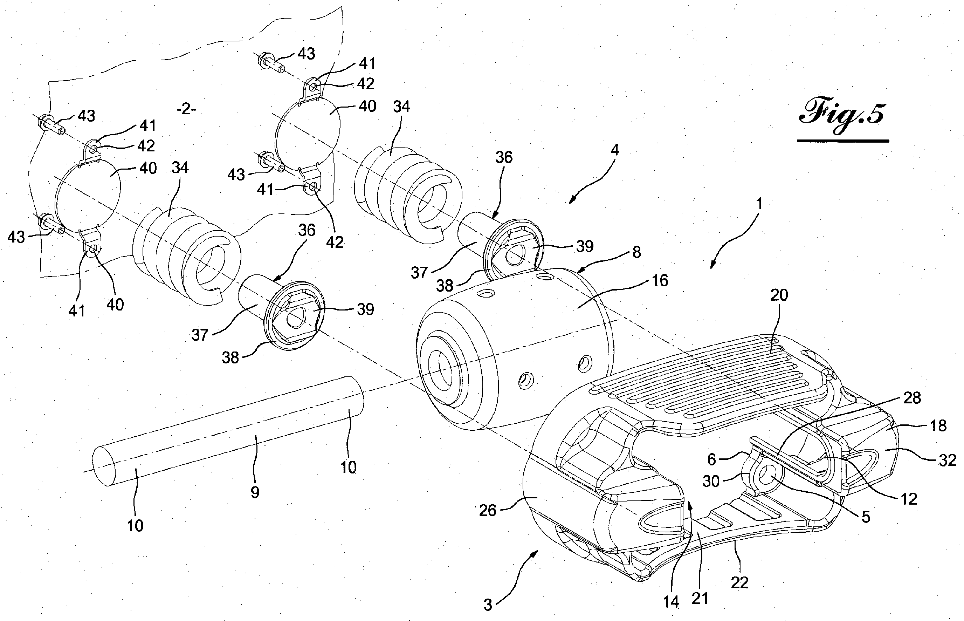

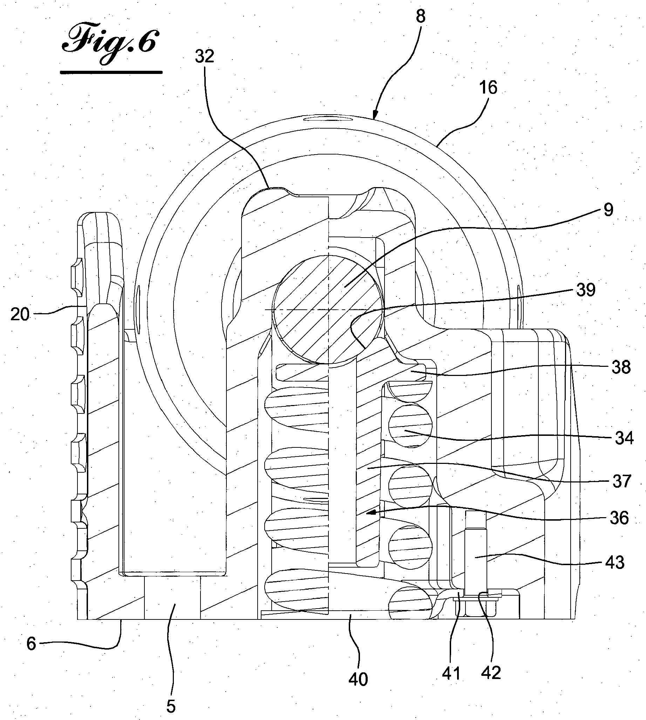

Les figures 5 et 6 montrent un deuxième mode de réalisation selon lequel, lors de l'assemblage du dispositif butoir après la mise en place des ressorts à l'intérieur du boîtier, les logements des ressorts sont fermés au niveau de l'extrémité arrière du carter, chacun par une platine de fermeture circulaire 40, pourvu à la périphérie, à des endroits diamétralement opposés, de deux pattes de fixation 41, chacune traversée par un trou de passage 42 d'une vis (non représentée) de fixation à l'extrémité arrière du carter.

L'assemblage du dispositif butoir est très simple, il suffit d'introduire successivement par l'extrémité arrière du carter, l'axe 9 dans les berceaux 18 et les ressorts 34 dans les espaces de réception en dessous des berceaux, après avoir mis en place dans les ressorts les guides de butée 36.

Puis on fixe cet ensemble sur le support 2 à l'aide des quatre vis de fixation qui sont accessibles de l'extérieur.

Dans le mode de réalisation des figures 5 et 6, on visse les platines 40 sur le bord arrière du carter avant la fixation de dispositif butoir assemblé sur le support 2.

Il est à noter que, dans ces deux premiers modes de réalisation, le rouleau butoir 8 et le carter s'étendent horizontalement.

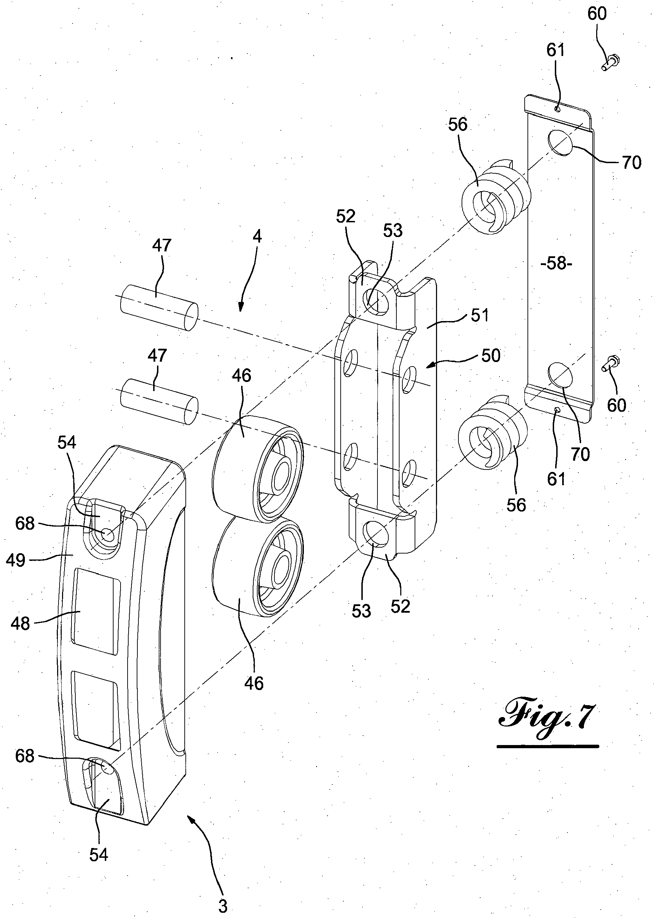

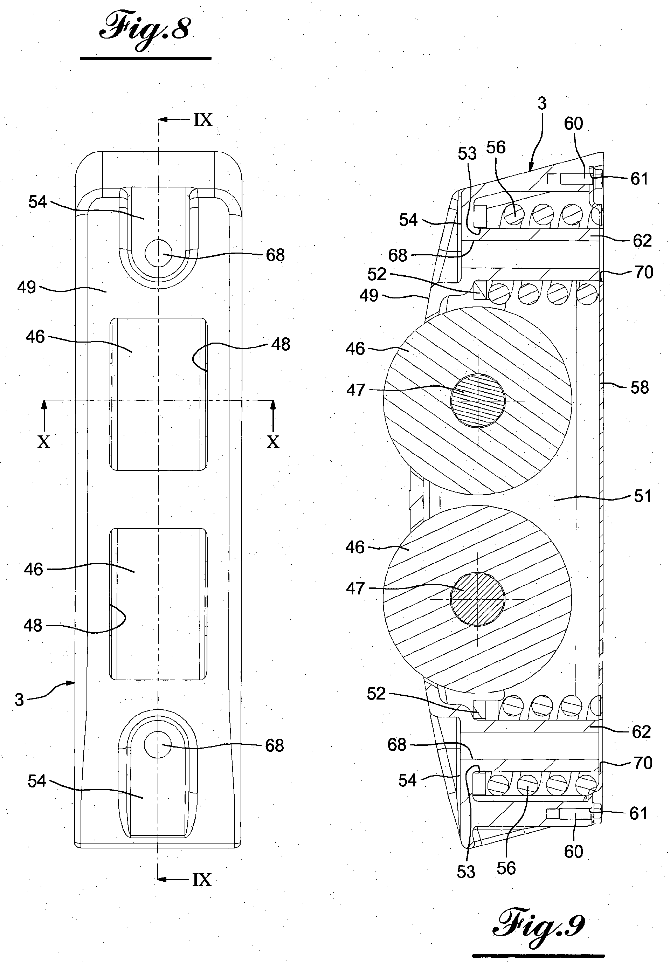

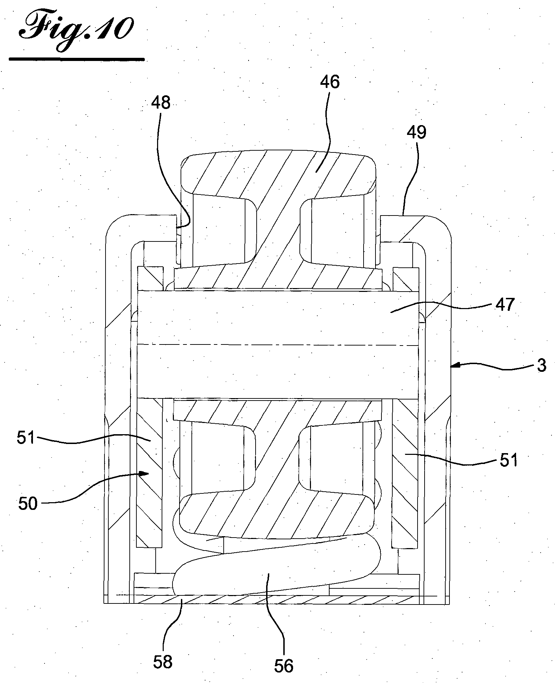

Les figures 7 à 10 illustrent un troisième mode de réalisation exemplaire, mais pas conforme à l'invention, dont le carter 3 s'étend verticalement et enferme deux rouleaux tampon 46 relativement étroits, qui sont montés dans le carter, l'un au-dessus de l'autre en faisant saillie vers l'avant par des fenêtres 48 dans la paroi avant 49 du carter. Celui-ci est creux et ouvert au niveau de son extrémité arrière. Les rouleaux 46 sont montés rotatifs chacun sur un axe 48 logé dans un support 50 en forme d'un cadre formé par deux parois parallèles verticales 51 reliées à leurs extrémités par une portion en forme d'une bride de liaison perpendiculaire 52 qui s'étend verticalement et est percée par un trou 53.

Le cadre présente une forme complémentaire à la forme du carter de butoir de façon à pouvoir être placé dans l'espace intérieur de celui-ci en prenant appui par ces brides d'extrémité 52 sur des pattes d'appui 54 prévues dans la paroi avant 49 du carter au niveau des extrémités latérales de celui-ci. Ces brides 52 ont chacune la fonction de constituer une butée d'appui d'une extrémité d'un ressort de compression 56 dont l'autre extrémité prend appui sur une platine de fermeture de carter 58 qui est destinée à être fixée à l'arrière du carter par des vis de fixation 60 au niveau des extrémités supérieure et inférieure du carter, destinées à passer par des trous 61.

Les parois 51 du cadre 50 sont éloignées l'une de l'autre, d'une distance au moins légèrement supérieure au diamètre extérieur des ressorts 56.

Il est à noter que, lors de l'assemblage, après la mise en place des rouleaux 46 et des ressorts 56 dans le cadre 50 et l'insertion de ce sous-ensemble dans le carter, les ressorts s'engagent chacun sur un élément tubulaire 62 qui fait saillie de la paroi avant 49 du carter jusqu'à la platine 58. La paroi avant étant bombée, elle comporte à chaque extrémité latérale une partie de paroi en retrait, qui est parallèle à la platine 58 et constitue la patte 54. Celle-ci comporte un trou 68 de passage d'une vis de fixation du carter sur le support 2. Le trou 68 est coaxial à l'élément tubulaire 62, au trou 52 du support 50, l'axe du ressort 56 et au trou correspondant 70 de la platine.

Pour compléter la description, il est à noter que le rouleau horizontal 8 des premier et second modes de réalisation des rouleaux butoir 8 sont réalisés soit sous forme de corps cylindrique creux, soit sous forme d'un « H » couché, légèrement bombés dans la direction axiale. Les rouleaux 46 du troisième mode de réalisation présentent, dans une vue de coupe diamétrale, au-dessus et en dessous du passage de son axe 48 le profil d'un H couché.

Il ressort de la description qui précède et des figures, que le dispositif butoir amortisseur selon l'invention présente une structure très simple n'utilisant qu'un nombre réduit de composants, dans la mesure où le rouleau butoir est tournant autour d'un axe qui est supporté par deux ressorts de façon à constituer un support déformable sous un effort et permettant d'amortir les chocs subis par le rouleau lorsqu'il est en contact avec un obstacle tel que par exemple un quai ou un autre élément. Le fait que le carter encapsule l'ensemble de l'agencement butoir supprime tout risque de détérioration du support en contact par exemple d'un quai. Il est à noter que la fonction de rotation du rouleau est assurée même si les ressorts sont écrasés par la mise en butée du guide 36 sur la surface de support 2, du guide 36 sur la platine de fermeture 40 de la platine 58 sur le cadre 50-sous l'effet de la pression contre le quai. Ceci assure la préservation à la fois du quai et du cadre arrière du véhicule porteur du dispositif.

Un avantage essentiel de l'invention réside dans le fait que le dispositif butoir proposé permet un assemblage du dispositif avant sa pose et que la pose du dispositif pré-assemblé sur son support se limite à la mise en place de seulement quatre vis accessibles de l'extérieur.

## Revendications

1. Dispositif butoir amortisseur destiné à être fixé sur un support (2) notamment prévu sur un véhicule, du type comprenant un corps de logement d'au moins un rouleau tampon cylindrique (8) monté dans le corps, rotatif autour d'un axe (9), déplaçable perpendiculairement à cet axe, à l'encontre de moyen de rappel (34), le corps comportant une extrémité arrière (6) destinée à être fixée sur le support (2) par des éléments de fixation tel que des vis passant à travers des trous de passage (5) et une extrémité avant comportant une ouverture (14) de passage vers l'avant d'une partie périphérique (16) du rouleau (8), le dispositif butoir amortisseur étant susceptible d'être pré-assemblé et monté à l'état pré-assemblé sur le support (2) et les trous de passage (5) des éléments de fixation étant accessibles de l'extérieur à partir de l'extrémité avant de façon que les éléments de fixation puissent être introduits dans le support (2) à travers les trous (5), à partir de cette extrémité avant, **caractérisé en ce que** le corps de logement est réalisé sous forme d'un carter creux (3), que les moyens de rappel sont formés par des ressorts de rappel orientés perpendiculairement à l'extrémité arrière du carter et sur lequel repose les extrémités (10) de l'axe (9), que le carter creux (3) est configuré de façon à encapsuler les ressorts et le rouleau tampon (8) et présente une forme générale parallélépipédique, ouvert à son extrémité arrière (6) et comportant à son extrémité avant, de part et d'autre de l'ouverture de passage (14) de la partie périphérique (16) du rouleau (8) des parois (32) de berceau (18) de logement des extrémités (10) de l'axe (9) de rotation du rouleau (8), qui reposent chacune sur un ressort de rappel.

2. Dispositif butoir amortisseur selon la revendication 1, **caractérisé en ce que** la paroi (32) d'un berceau (18) se prolonge jusqu'à l'extrémité arrière (6) du carter (3) par des éléments de support (28) de façon que l'espace entre le berceau (18) et l'extrémité arrière constitue un espace de réception d'un ressort (34) d'un support de l'extrémité (10) de l'axe (9) logée dans le berceau.

3. Dispositif butoir amortisseur selon la revendication 2, **caractérisé en ce qu'**une extrémité (10) de l'axe (9) prend appui sur un ressort (34) par l'intermédiaire d'un guide butée (36) comprenant une partie cylindrique (37) s'engageant coaxialement dans le ressort et à son extrémité extérieure à plateau (38) pourvu d'une surface comportant un relief (39) complémentaire à la forme de l'extrémité (10) de l'axe.

4. Dispositif butoir amortisseur selon la revendication 3, **caractérisé en ce que** le pied de la structure de support (28) d'un berceau (18) est relié à la paroi latérale du carter (3) par une portion de paroi (30) comportant des trous de passage (5) des vis de fixation sur le support (2) du dispositif butoir.

5. Dispositif butoir selon l'une des revendications 1 à 4, **caractérisé en ce que** chaque berceau (18) est relié au niveau de sa base au bord avant de chaque paroi latérale (20, 21) par une portion de paroi avant (29) et **en ce que** les portions de parois avant (29) présentent dans leur bord de limitation de l'ouverture de passage de rouleau (14) une découpe au-dessus de chaque trou de passage (5) permettant l'accès à ce trou.

6. Dispositif butoir amortisseur selon l'une des revendications 2 à 5, **caractérisé en ce que** l'espace de réception d'un ressort (34), délimité par la structure de support de chaque berceau (18), est fermé au niveau de l'extrémité arrière (6) du carter par une platine de fermeture (40) pourvues de moyens de fixation sur le bord arrière du carter.

## Patentansprüche

1. Anschlag- und Puffereinrichtung, die bestimmt ist, auf einem Halter (2) befestigt zu sein, der vor allem auf einem Fahrzeug vorgesehen, der Bauart, umfassend einen Aufnahmekörper mindestens einer zylindrischen Pufferrolle (8), die rotierend um eine Achse (9) senkrecht zu dieser Achse verlagerbar gegen Rückstellmittel (34) in dem Körper montiert ist, wobei der Körper ein hinteres Ende (6), das bestimmt ist, auf dem Halter (2) mit Befestigungselementen wie Schrauben, die durch Durchgangslöcher (5) gehen, und ein vorderes Ende, das eine Durchgangsöffnung (14) nach vorn eines Umfangsteils (16) der Rolle (8) aufweist, aufweist, wobei die Anschlag- und Puffereinrichtung vormontierbar ist und im vormontierten Zustand auf dem Halter (2) montiert ist und die Durchgangslöcher (5) der Befestigungselemente von außen ab dem vorderen Ende zugänglich sind, damit die Befestigungselemente in den Halter (2) durch die Löcher (5) ab diesem vorderen Ende einsetzbar sind, **dadurch gekennzeichnet, dass** der Aufnahmekörper in Form eines hohlen Gehäuses (3) realisiert ist, dass die Rückstellmittel von Rückstellfedern gebildet sind, die senkrecht zum hinteren Ende des Gehäuses ausgerichtet sind und auf denen die Enden (10) der Rotationsachse (9) ruhen, dass das hohle Gehäuse (3) derart konfiguriert ist, dass die Federn und die Pufferrolle (8) eingekapselt sind und eine allgemein parallelepipedische Form aufweist, die an ihrem hinteren Ende (6) offen ist und an ihrem vorderen Ende beiderseits der Durchgangsöffnung (14) des Umfangsteils (16) der Rolle (8) Wände (32) einer Aufnahmewiege (18) der Enden (10) der Rotationsachse (9) der Rolle aufweist, die jeweils auf einer Rückstellfeder ruhen.

2. Anschlag- und Puffereinrichtung nach Anspruch 1, **dadurch gekennzeichnet, dass** sich die Wand (32) eine Wiege (18) bis zum hinteren Ende (6) des Gehäuses (3) anhand von Stützelementen (28) derart verlängert, dass der Raum zwischen der Wiege (18) und dem hinteren Ende einen Empfangsraum einer Feder (34) einer Stütze des Endes (10) der Achse (9) bildet, das in der Wiege ruht.

3. Anschlag- und Puffereinrichtung nach Anspruch 2, **dadurch gekennzeichnet, dass** sich ein Ende (10) der Achse (9) auf einer Feder (34) mit Hilfe einer Anschlagführung (36) abstützt, die einen zylindrischen Teil (37) umfasst, der koaxial in die Feder eingreift, und an ihrem äußeren Ende mit Platte (38) mit einer Fläche ausgestattet ist, die ein Relief (39) aufweist, das zur Form des Endes (10) der Achse komplementär ist.

4. Anschlag- und Puffereinrichtung nach Anspruch 3, **dadurch gekennzeichnet, dass** der Fuß der Stützstruktur (28) einer Wiege (18) mit der Seitenwand des Gehäuses (3) mit Hilfe eines Wandabschnitts (30) verbunden ist, der Durchgangslöcher (5) der Befestigungsschrauben auf dem Halter (2) der Anschlageinrichtung aufweist.

5. Anschlageinrichtung nach einem der Ansprüche 1 bis 4, **dadurch gekennzeichnet, dass** jede Wiege (18) im Bereich ihrer Basis mit dem vorderen Rand jeder Seitenwand (20, 21) mit Hilfe eines vorderen Wandabschnitts (29) verbunden ist und dass die vorderen Wandabschnitte (29) in ihren Begrenzungsrändern der Rollendurchgangsöffnung (14) einen Ausschnitt über jeden Durchgangsloch (5) aufweisen, der den Zugang zu diesem Loch erlaubt.

6. Anschlag- und Puffereinrichtung nach einem der Ansprüche 2 bis 5, **dadurch gekennzeichnet, dass** der Empfangsraum einer Feder (34), der von der Stützstruktur jeder Wiege (18) begrenzt ist, im Bereich des hinteren Endes (6) des Gehäuses mit einer Verschlussplatte (40) verschlossen ist, die mit Befestigungsmitteln auf den hinteren Rand des Gehäuses ausgestattet ist.

## Claims

1. A shock-absorbing stopper device intended to be fastened on a support (2) in particular provided on a vehicle, of the type comprising a body for housing at least one cylindrical buffer roller (8) mounted in the body, rotating around an axle (9), movable perpendicular to the axle, against return means (34), the body including a rear end (6) intended to be fastened on the support (2) by fastening elements such as screws passing through passage holes (5) and a front end including a passage opening (14) toward the front of a peripheral part (16) of the roller (8), the shock-absorbing stopper device being able to be preassembled and mounted in the pre-assembled state on the support (2) and the passage holes (5) of the fastening elements being accessible from the outside from the front end such that the fastening elements can be inserted into the support (2) through the holes (5), from that front end, **characterized in that** the housing body is made in the form of a hollow case (3), the return means are formed by return springs oriented perpendicular to the rear end of the case and on which the ends (10) of the axle (9) rest, the hollow case (3) is configured so as to encapsulate the springs and the buffer roller (8) and has a generally parallelepiped shape, open at its rear end (6) and including, at its front end, on either side of the passage opening (14) of the peripheral part (16) of the roller (8), cradle (18) walls (32) for housing the ends (10) of the rotation axle (9) of the roller (8), which each rest on a return spring.

2. The shock-absorbing stopper device according to claim 1, **characterized in that** the wall (32) of a cradle (18) extends to the rear end (6) of the case (3) by support elements (28) such that the space between the cradle (18) and the rear end constitutes a space for receiving a spring (34) of a support for the end (10) of the axle (9) housed in the cradle.

3. The shock-absorbing stopper device according to claim 2, **characterized in that** one end (10) of the axle (9) bears on a spring (34) via a stop guide (36) comprising a cylindrical part (37) engaging coaxially in the spring and at its outer end having a plate (38) provided with a surface including a relief (39) complementary to the shape of the end (10) of the axle.

4. The shock-absorbing stopper device according to claim 3, **characterized in that** the foot of the support structure (28) of the cradle (18) is connected to the side wall of the case (3) by a wall portion (30) including passage holes (5) for fastening screws on the support (2) of the stopper device.

5. The stopper device according to one of claims 1 to 4, **characterized in that** each cradle (18) is connected at its base to the front edge of each side wall (20, 21) by a front wall portion (29) and **in that** the front wall portions (29) have, in their edge delimiting the roller passage opening (14), a cutout above each passage hole (5) allowing access to that hole.

6. The shock-absorbing stopper device according to one of claims 2 to 5, **characterized in that** the receiving space for a spring (34), defined by the support structure of each cradle (18), is closed at the rear end (6) of the case by a closing platen (40) provided with fastening means on the rear edge of the case.
